# EUROPEAN PATENT SPECIFICATION

(11) **EP 4 359 720 B1**
(45) Date of publication and mention of the grant of the patent: **28.10.2026**
(21) Application number: 22826939.5
(22) Date of filing: 24.06.2022
(51) Int. Cl.: F28D 21/00, B01D 61/36, B01D 63/08, B01D 69/10, B01D 69/12, B01D 71/36, F28D 9/00, F28F 9/00, F28F 9/007

(54) **MEMBRANE ASSEMBLY FOR MEMBRANE ENERGY EXCHANGER**
MEMBRANANORDNUNG FÜR MEMBRANENERGIEAUSTAUSCHER
ENSEMBLE MEMBRANE POUR ÉCHANGEUR D'ÉNERGIE À MEMBRANE

(30) Priority: 25.06.2021 US 202163215302 P
(43) Date of publication of application: 01.05.2024
(73) Proprietor: Nortek Air Solutions Canada, Inc., Saskatoon, Saskatchewan S7K 1V7 (CA)
(72) Inventor: LEPOUDRE, Philip Paul, Saskatoon, Saskatchewan S7H 4A4 (CA); NIROOMAND, Shirin, Saskatoon, Saskatchewan S7K 1V7 (CA); CUI, Zheng, Saskatoon, Saskatchewan S7K 1V7 (CA)
(74) Representative: Marks & Clerk LLP
(86) International application number: PCT/CA2022/051019
(87) International publication number: WO 2022/266773

(56) References cited:
- CA-A1- 2 300 209
- CA-A1- 2 300 209
- US-A1- 2006 162 914
- US-A1- 2014 260 373
- US-A1- 2021 010 765
- US-B2- 10 712 024
- US-B2- 10 712 024
- US-B2- 7 128 532
- US-B2- 7 128 532
- US-B2- 9 234 665
- US-B2- 9 234 665

## Description

### BACKGROUND

A liquid to air membrane energy exchanger (LAMEE) can transfer heat and/or moisture between a flow of liquid and an air stream to condition the temperature and/or humidity of the air or liquid flowing through the LAMEE. LAMEEs can be used in a variety of applications, for example, Heating Ventilation and Air Conditioning (HVAC) systems, dehumidification systems, evaporative cooling, industrial applications requiring treated air, energy recovery systems, and other systems for conditioning a fluid flowing through the LAMEE and/or for conditioning environmental conditions in an enclosed space. LAMEEs include membrane assemblies, each of which separates adjacent liquid and air channels and via which energy is exchanged between the liquid and the air in the exchanger.

US 2006/162914 A1 relates to a heat exchanger comprising two sets of medium through-flow channels through which two media can flow in heat-exchanging contact. Walls separate the channels, and heat conducting fins are arranged on both sides of each wall wherein a fin on the one side of a wall is in thermal contact with a similar contact surface of a fin on the other side of the wall. The wall is embodied as a membrane. The fins are embodied as heat transferring strips with a general wave shape and are provided with contact surfaces connected to the walls and main planes extending between two walls.

CA 2300209 relates to an apparatus to transfer gas to or from a liquid, which has a flexible and oxygen permeable but liquid water impermeable membrane, a flexible and gas permeable spacer, an inlet conduit, an outlet conduit and a non-rigid restraint system. The membrane encloses an inner space containing the spacer and the spacer and the membrane together form a planar element. The inlet conduit and outlet conduit allow gases to flow into and out of the planar element. The non rigid restraint system permits the planar element to be fixedly but non-rigidly restrained in a selected position in a selected reactor.

### SUMMARY

In accordance with the invention, there is provided: a membrane assembly as recited by claim 1; a liquid panel as recited by claim 12; and a liquid to air membrane energy exchanger (LAMEE) as recited by claim 13.

Examples according to this disclosure are directed to membrane assemblies, which may be employed in a variety of membrane exchangers, including, for example, LAMEEs. For example, a membrane assembly includes a membrane film, a substrate, and a plurality of tensile support members. Also, the membrane assembly can include a membrane film directly adhered to the plurality of tensile support members and without the substrate therebetween. The membrane film is configured to transfer heat and moisture between a liquid and air flowing through a LAMEE. The substrate can be connected to the membrane film. The tensile support members can be connected to the substrate or directly to the membrane film. And, the tensile support members are spaced in relation to one another and oriented perpendicular to a direction of flow of liquid through the LAMEE.

A LAMEE can include a series of alternating liquid and air channels separated by a membrane assembly including a membrane that is configured to allow fluid vapor/molecules to pass through the membrane and prevent liquids or solids from passing through the membrane. In this manner, a LAMEE can exchange heat (sensible energy) and moisture (latent energy) between a liquid and air flowing through the exchanger. Typically, the pressure of the liquid through such liquid channels is higher than that of the air pressure flowing through the adjacent air channel(s). As such, the flexible membranes of the membrane assemblies can tend to bow or bulge into the airflow channel. Such membrane bulging can restrict airflow through the airflow channel and can degrade the capacity of the system to condition the air, the fluid, or both.

In some past LAMEE designs, to counteract membrane bulging, a support structure is arranged in the air channels between membranes. Additionally, in some previous LAMEE designs, a rigid woven mesh is included in the membrane assembly to provide additional structural support. However, a number of challenges with membrane assemblies having such a rigid mesh supporting the membrane film have been discovered.

The mesh can impede breathability of the membrane assembly as a whole and can reduce the surface area of the film available for heat and mass transfer by the air and liquid traveling through the exchanger including the membrane assembly. Further, the need to reinforce a membrane film and substrate laminate with a rigid mesh can increase the cost, complexity, and time to manufacture the membrane assembly. In cases in which the reinforcement mesh is a polymer, the membrane assembly can slowly move or deform permanently under the influence of persistent mechanical stresses due to degradation of the polymer. Such material creep can inhibit the longevity of the LAMEE (or other exchanger) within a conditioning system. Yet another challenge to the use of such rigid mesh supports can be the inadvertent creation of additional heat and mass transfer resistance or air side pressure drop across the LAMEE. The present inventors have recognized, among other things, that an unintrusive membrane assembly which is configured to carry the load of/oppose a force applied by liquid pressure of the liquid channel can be used to enhance the efficiency and conditioning capacity of LAMEEs or other membrane exchangers.

Examples according to this disclosure are directed to membrane assemblies, which include a membrane film that is configured to allow materials in a gas phase to pass through the membrane and to prevent materials in a liquid or solid phase from passing through the membrane. Example membrane assemblies also include a plurality of tensile support members, which are configured to carry the load of/oppose the force/pressure of liquid flowing through liquid channels bounded by a pair of the membrane assemblies. In examples, the tensile support members can be elongated filaments spanning across the membrane film in spaced relation to one another and oriented perpendicular to the direction of air and liquid flow through the exchanger in which the membrane assembly is employed. Membrane assemblies in accordance with this disclosure can be employed in a variety of applications, including, for example, in a LAMEE.

For instance, a fluid conditioning system can include use of a LAMEE having a membrane assembly in accordance with this disclosure. In one example, several membrane assemblies can be arranged to separate a series of alternating liquid and air channels. Each membrane assembly can include or use a membrane film. The membrane film can be a semi-permeable or vapor permeable film, by which generally anything in a gas phase can pass through the membrane and anything in a liquid or solid phase cannot pass through the membrane. The membrane film can also include a micro-porous membrane that is similarly configured to allow gases but not liquids or solids to pass through the membrane. Additionally, the membrane film employed in membrane assemblies in accordance with this disclosure can be a non-porous film having selective permeability for, e.g., water vapor/molecules, but not for other constituents in vapor/gas form/state/phase.

Generally, the membrane film can be relatively thin and fragile. The film can therefore be coupled to a substrate to provide a baseline of support to the membrane film for transport and processing the membrane film into finished membrane assemblies. The substrate can further include or use or be attached to a plurality of tensile support members. The tensile members can be oriented perpendicular to a direction of flow of liquid through the liquid channel including the membrane assembly to inhibit or eliminate bulging of the membrane assembly into the air channel.

For example, in a LAMEE or other membrane exchanger in which liquid flows horizontally through the exchanger, the tensile members can be arranged vertically and spaced/offset from one another to provide adequate directional support while still allowing for substantial surface area of the membrane film to be exposed to the liquid and air that it separates. The tensile members can be coupled to a frame and/or struts, e.g., in the liquid and air flow channels, to transfer force from the liquid pressure through the tensile members to the frame and/or struts.

The present inventors have recognized, among other things, that such a membrane assembly can provide suitable strength and longevity while also enabling sufficient contact of the liquid and air with the membrane film, which can enhance the ability of the LAMEE to efficiently exchange energy between fluid and air over longer periods of time between maintenance and/or replacement of the membrane assemblies. Further, the present inventors have recognized that the use of such a membrane assembly can enable sufficient airflow through the air channels without the need for other structural components which could impede breathability of the membrane assembly.

This overview is intended to provide an overview of subject matter of the present patent application. It is not intended to provide an exclusive or exhaustive explanation of the invention. The detailed description is included to provide further information about the present patent application.

### BRIEF DESCRIPTION OF THE DRAWINGS

FIG. 1A is perspective view depicting a portion of a LAMEE including a membrane assembly in accordance with examples of this disclosure.
FIG. 1B is a side view of the LAMEE of FIG. 1A.
FIG. 1C is a cross-sectional view of the membrane assembly of FIGS. 1A and 1B.
FIG. 1D is a perspective view of a portion of the membrane assembly of FIGS. 1A-1C.
FIG. 2 is a perspective view depicting an example LAMEE including membrane assemblies in accordance with this disclosure.
FIG. 3 is a cut-away view of liquid panels within an energy exchange cavity of the LAMEE of FIG. 2.
FIG. 4 is an exploded view of an energy exchange cavity of a LAMEE.
FIG. 5 is an elevation front view of a LAMEE.
And, FIG. 6 is a cross-sectional view of a membrane assembly of a LAMEE.

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

### DETAILED DESCRIPTION

Examples according to this disclosure include membrane assemblies, which can be used in a liquid to air membrane energy exchanger (LAMEE) to exchange energy between a liquid and air traveling through the exchanger. A LAMEE can be used in a variety of HVAC systems including, for example, air conditioner, liquid cooler, direct or indirect evaporative cooler, and regeneration systems. For example, a LAMEE can evaporatively cool a liquid passing through liquid channels of the LAMEE. As another example, a LAMEE can modulate the temperature and/or humidity of air passing through one or more airflow channels of the LAMEE. Example membrane assemblies in accordance with this disclosure are described in conjunction with use in LAMEEs. However, example membrane assemblies may also be advantageously used in other types of exchangers or other devices.

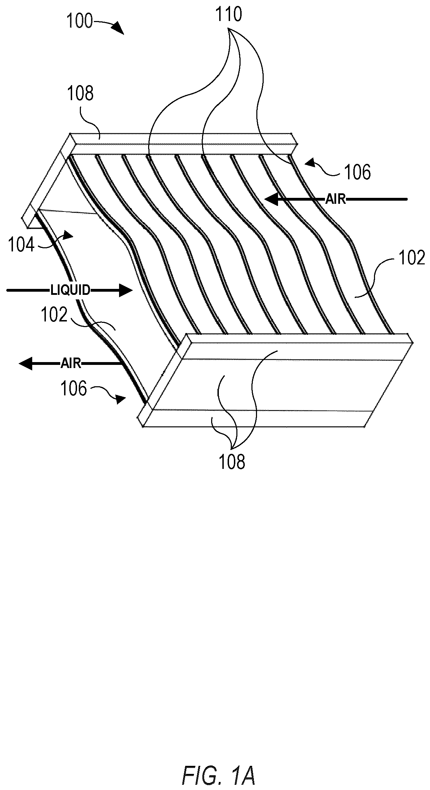

FIGS. 1A-1C depict a portion of an example LAMEE 100 including a membrane assembly 102 in accordance with this disclosure. The portion of the LAMEE 100 depicted in FIG. 1A includes membrane assembly 102, fluid channel 104, and air channel 106. The liquid channel 104 and the air channel 106 are arranged adjacent to each other and separated by the membrane assembly 102. Support struts or spacers 108 are attached on either side of the membrane assembly 102 to form adjacent liquid and air channels 104, 106. The liquid and air flowing through the liquid channel 104 and the air channel 106 move in counterflow or, in other words, opposite directions. Other LAMEEs including membrane assemblies in accordance with this disclosure, however, could be configured for crossflow or cross-counterflow of liquid and air.

The liquid channel 104 and air channel 106 of LAMEE 100 are depicted in a somewhat simplified form and only a relatively small portion of the LAMEE 100 is depicted to emphasize various aspects of the membrane assembly 102. However, LAMEEs including membrane assemblies in accordance with this disclosure can include a variety of liquid and air channel configurations. For example, a LAMEE can include a stack of alternating liquid and air channels. The liquid channels can include a liquid panel assembly, which encases the liquid flowing through the liquid panel between a pair of membrane assemblies, and the air channels can include a spacer or other structure (e.g., including struts like the struts 108) between pairs of liquid panels to define and encase air flow through the air flow channels. Each liquid panel assembly can define a plurality of separated liquid flow channels through the panel such that the liquid passing through the liquid panel is distributed among individual, fluidically isolated liquid flow channels. The air flow channel spacers can include struts that span a major dimension of the LAMEE (for example, span the length of the LAMEE in the direction of/parallel with air flow through the LAMEE) and can also include additional structures that modulate the flow of air through the LAMEE in one or more advantageous ways.

Referring again to FIG. 1A, a liquid, e.g. water or a liquid desiccant flows through the liquid channel 104 and air flows through the air channel 106 of the LAMEE 100 in the opposite direction as the liquid. The liquid and air flowing through the LAMEE 100 are separated by the membrane assembly 102 and the LAMEE is configured to transfer heat and/or moisture between the fluid streams. As illustrated in FIG. 1A, the pressure of the liquid within the liquid channel 104 can deflect the membrane assembly 102 outward and into the air channel 106.

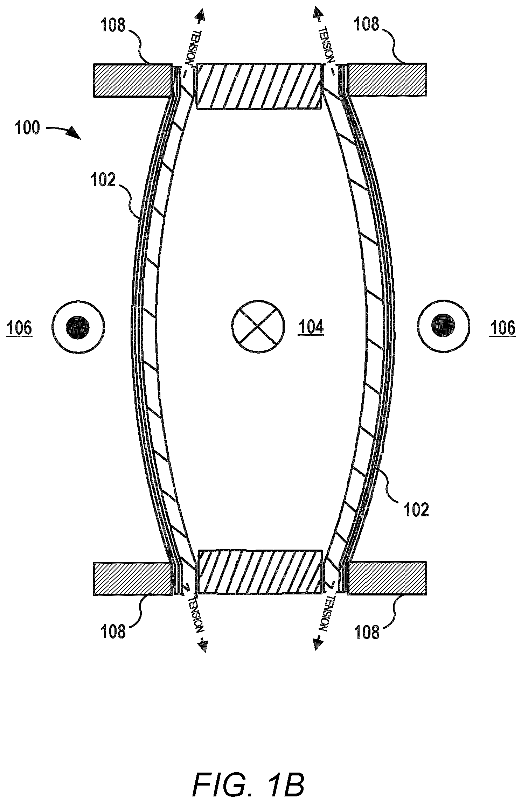

FIG. 1B is an elevation front view depicting the LAMEE 100, including the liquid channel 104, the air channel 106, and the membrane assembly 102 therebetween. FIG. 1B depicts the bulging of the membrane assembly 102 in more detail. Additionally, FIG. 1B depicts the LAMEE 100 in one possible orientation in which it may be operated with the liquid channel 104 and the air channel 106 oriented for horizontal liquid and air flow and the membrane assembly spanning the channels vertically between struts 108.

In examples, the membrane assembly 102 is a multi-layer laminate including, in the orientation of FIG. 1B, a plurality of vertically extending and horizontally spaced apart tensile support members 110. The tensile support members 110 can be filaments formed from a variety of materials and can be oriented perpendicular to direction of flow of liquid through liquid channel 104 and air through air channel 106. The orientation of tensile support members 110 relative to the direction of fluid flow through LAMEE 100 can be adapted to improve/optimize tensile strength of the membrane assembly 102 against a pressure force from the liquid flowing through liquid channel 104.

In examples, the tensile support members 110 are elongated filaments that function to transfer the force generated by liquid pressure in liquid channel 104 to the struts 108, which struts are coupled to a frame or housing of LAMEE 100. The tensile support members 110 span/extend the entire distance across the liquid and air channels 104, 106.

The loading of the membrane assembly 102 may be, in some applications including the example depicted in FIGS. 1A-1C, generally in a single direction and tensile support members 110 may therefore be configured and arranged to increase the strength of the membrane assembly 102 in this single loading direction. Thus, in some examples, the membrane assembly 102 can have a pre-determined directional strength that is configured to oppose the liquid pressure force from a first direction while being relatively less capable of opposing other forces from other directions. In so doing, the membrane assembly 102 can provide useful rigidity/strength and can minimize displacement or bulging of the assembly 102 into the air channel 106, while eliminating the need for support material to provide rigidity in directions that do not experience forces from the liquid in the liquid channel 104 or other sources.

Thus, the membrane assembly 102, particularly the tensile support members 110, can provide a tailored, directional rigidity/strength against the pressure from the liquid in the liquid channel 104 while not substantially inhibiting permeability of the membrane assembly 102 or contact of the air and liquid with the surface of a membrane film of the membrane assembly 102.

In FIG. 1B, two membrane assemblies 102 are arranged between the struts or spacers 108 to form the liquid channel 104 therebetween. The membrane assemblies 102 can each be attached to or held by the struts 108, which struts can apply or maintain tension of each of the membrane assemblies 102. A liquid flowing through the liquid channel 104 exerts an outward or bulging pressure on each of the membrane assemblies 102, as indicated by the arrows in FIG. 1B. The membrane assemblies 102 include the tensile support members 110 (as depicted in FIG. 1A) to increase the rigidity/strength of the membrane assemblies 102 and to thereby decrease the displacement or bulging of either of the membrane assemblies 102 into adjacent air channels 106. In reducing such restriction of the air channels 106, the membrane assembly 102 can reduce pressure drop across the LAMEE 100 and, for example, associated fan power needed to compensate for such pressure drop.

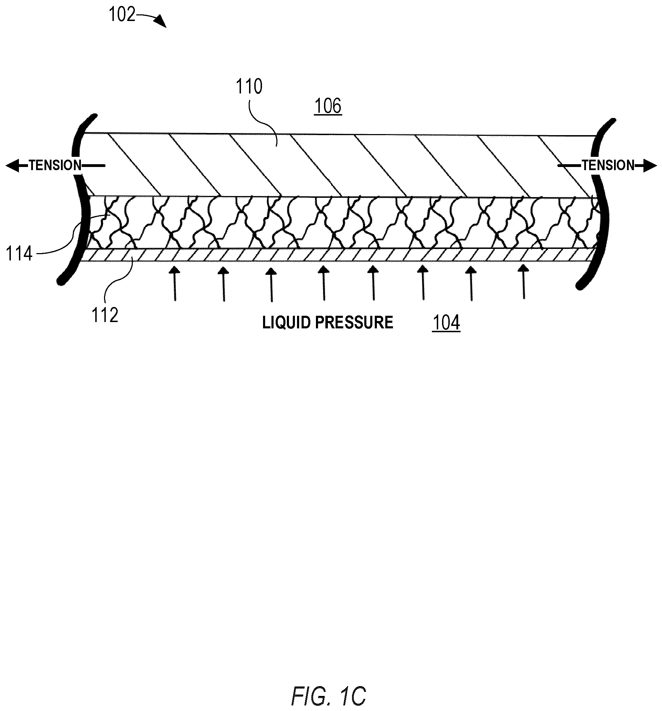

FIG. 1C is a cross-sectional view depicting an example of the multi-layer construction of example membrane assembly 102. The membrane assembly 104 can include or use a membrane film 112, a substrate 114, and the tensile support members 110. The membrane film 112 can be arranged in the layer superadjacent to the liquid channel 104 and the liquid flowing therethrough with the substrate 114 in the next layer over the membrane film 112 and, finally, the tensile support members 110 over the substrate 114.

The membrane film 112 can be a semi-permeable or vapor permeable film, by which generally anything in a gas phase can pass through the membrane and anything in a liquid or solid phase cannot pass through the membrane. The membrane film 112 can also include a micro-porous membrane that is similarly configured to allow gases but not liquids or solids to pass through the membrane. Additionally, the membrane film employed in membrane assemblies in accordance with this disclosure can be a non-porous film having selective permeability, e.g., for water vapor/molecules, but not for other constituents in vapor/gas form/state/phase. The membrane film 112 can be constructed of polytetrafluoroethylene (PTFE), polypropylene, polyethylene, or other suitable membrane materials.

The substrate 114 can be attached to the membrane film 112 to provide additional support to the membrane film 112. The substrate 114 can be configured and constructed to transfer a loading or force from liquid pressure on the membrane film 112 to the tensile support members 110. The substrate 114 can be contacted at a plurality of locations of the membrane film 112. The substrate 114 can be finely spored and can be a coarse porous material. The substrate 114 can also be a highly breathable spunbound fabric, veil, or other fibrous material. The substrate 114 can be bonded to the membrane film by thermal lamination, chemical adhesive, ultraviolet-curable adhesive, radiofrequency welding, laser welding, solvent, or adhesive. The substrate 114 can cover or support the membrane film 112 such as to prevent puncture or impact during manufacturing and operation. The substrate 114 can be permeable and breathable to allow air, vapor, or other gases to pass through the substrate and contact the membrane film 112. The substrate 114 can enhance the ability to join the components of the membrane assembly 102 together in manufacturing, because, for example, fine fibers in the substrate 114 may be thermally laminated into pores of the membrane film 112. Further, the substrate 114 may be readily bondable to the tensile support members 110.

The tensile support member 110 can be oriented such as to carry the load of liquid pressure in an exchanger and to transfer this load to an external supporting structure, such as the struts 108, as described in detail above. The tensile support member 110 can be formed from a variety of materials, including, for example, ceramic, metallic, and/or glass fibers, or synthetic polymers such as thermoplastics, thermosets, elastomers, or synthetic fibers. The tensile support member 110 can be a filament formed of polypropylene, polyester, Teflon fluorinated ethylene propylene, polyamide, polypropylene, Polyethylene, Polybutylene, Polymethylpentene, Polycarbonate, Polytetrafluoroethylene, Polyether ether ketone, or other polymers. The tensile support member 110 can be single stranded, double stranded, or multi-stranded. In some examples, the tensile support member 110 can be formed of threads or other types of netting, mesh, woven, or extruded materials. The tensile support member 110 can be attached to the substrate 114 by a variety of methods, including, for example, weaving, thermal lamination, chemical adhesive, ultraviolet-curable adhesive, radiofrequency welding, ultrasonic welding, laser welding, solvent, and/or adhesive.

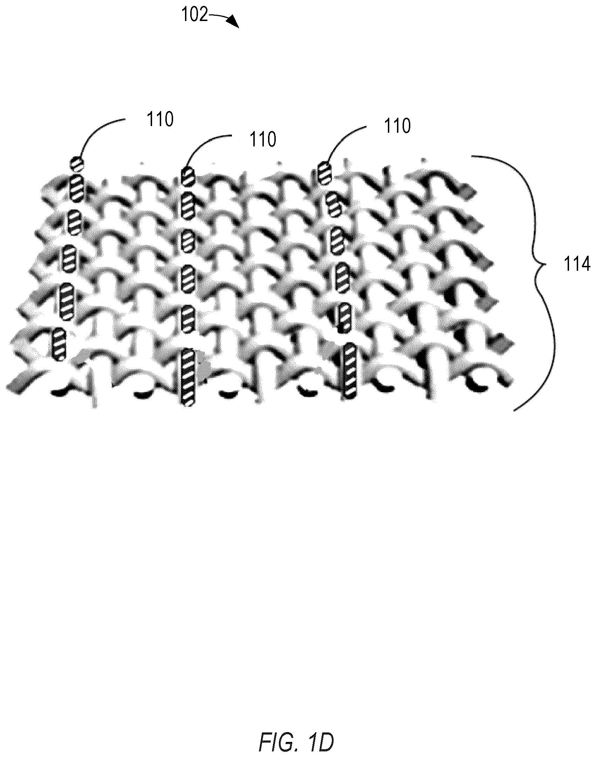

FIG. 1D shows a perspective view of a portion of example membrane assembly 102. In the example of FIG. 1D, the tensile support member is integrated with or woven into the substrate 114. The tensile support member 110 can be integrated into the substrate 114 by, for example, additive manufacturing processes such as 3D printing. The tensile support member 110 can be made from the same or different material as the substrate 114. Also, the tensile support member 110 can be integrated into the substrate 114 as a part of the process of substrate fabrication. As an example, and may be the case of the example depicted in FIG. 1D, woven substrate 114 incorporates supporting the tensile support member 110, which is an elongated filament interlaced into fibers or threads of the substrate 114.

In other examples, the tensile support members of membrane assemblies in accordance with this disclosure can be bound to a substrate as a separate layer. Alternatively or additionally, the tensile support members can be produced using methods to integrate the supporting members into the substrate by, for example, electrospinning to fabricate nanofiber fabrics or spun-bonding to fabricate non-woven fabrics.

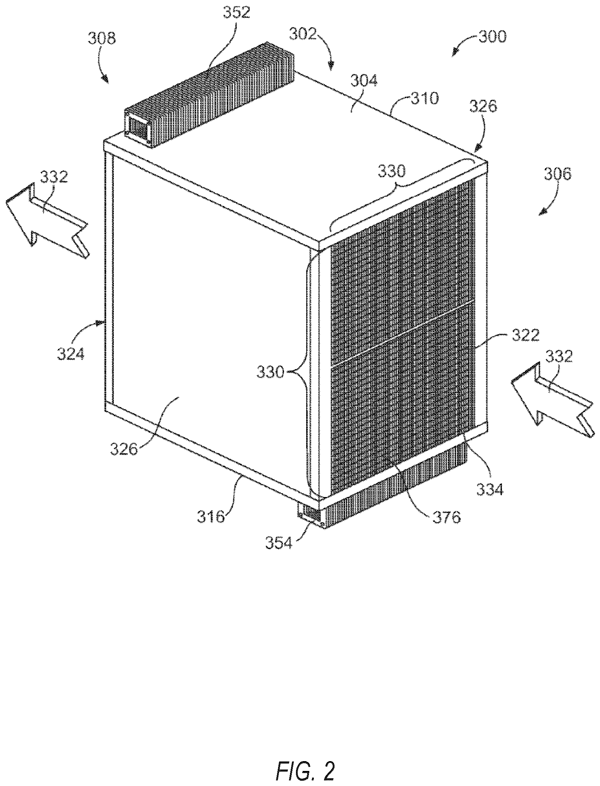

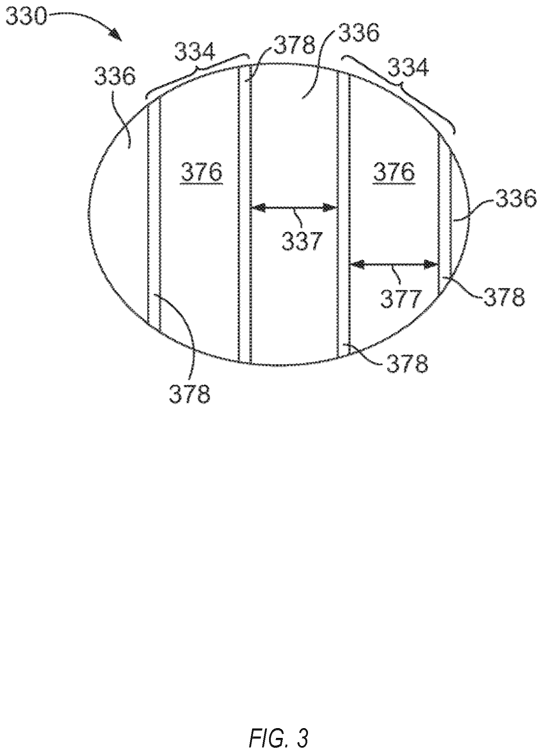

FIGS. 2-4 illustrate an example LAMEE in which membrane assemblies in accordance with this disclosure may be employed. FIG. 2 is a perspective view depicting an example LAMEE 300 including membrane assemblies 378 (shown in FIG. 3) separating adjacent liquid and air channels through the device. The LAMEE 300 includes a housing 302 having a body 304. The body 304 includes an air inlet end 306 and an air outlet end 308. A top 310 extends between the air inlet end 306 and the air outlet end 308. A bottom 316 extends between the air inlet end 306 and the air outlet end 308.

An air inlet 322 is positioned at the air inlet end 306. An air outlet 324 is positioned at the air outlet end 308. Sides 326 extend between the air inlet 322 and the air outlet 324.

An energy exchange cavity 330 extends through the housing 302 of the LAMEE 300. The energy exchange cavity 330 extends from the air inlet end 306 to the air outlet end 308. An air stream 332 is received in the air inlet 322 and flows through the energy exchange cavity 330. The air stream 332 is discharged from the energy exchange cavity 330 at the air outlet 324. The energy exchange cavity 330 may include a plurality of panels 334, such as liquid panels, each of which is configured to receive a liquid and direct the flow of the liquid therethrough, for example, via a plurality of individual, fluidically isolated liquid flow channels included in each liquid panel.

A liquid inlet reservoir 352 may be positioned on the top 310. The liquid inlet reservoir 352 may be configured to receive liquid, which may be stored in a storage tank. The liquid inlet reservoir 352 may include an inlet in flow communication with the storage tank. The liquid flowing through LAMEE 300 is received through the inlet. The liquid inlet reservoir 352 may also include an outlet that is in fluid communication with liquid channels 376 of the panels 334 in the energy exchange cavity 330. The liquid flows through the outlet into the liquid channels 376. The liquid flows along the panels 334 through the liquid channels 376 to a liquid outlet reservoir 354, which may be positioned at or proximate the bottom 316. Accordingly, the liquid may flow through the LAMEE 300 from top to bottom (and side-to-side). For example, the liquid may flow into the liquid channels 376 proximate the liquid inlet reservoir 352, down to and through horizontally oriented liquid channels 376, and out of the LAMEE 300 proximate to the liquid outlet reservoir 354. In an alternative embodiment, the liquid may flow through the LAMEE 300 from bottom to top.

FIG. 3 illustrates a cut-away front view of the panels 334 within the energy exchange cavity 330 of the LAMEE 300. The panels 334 may be solution or liquid panels configured to direct the flow of liquid therethrough. The panels 334 form a liquid flow path 376 that is confined by membrane assemblies 378 on either side and is configured to carry liquid therethrough. The membrane assemblies 378 are arranged in parallel to form air channels 336 with an average flow channel width of 337 and liquid channels 376 with an average flow channel width of 377. In one embodiment, the membrane assemblies 378 are spaced to form uniform air channels 336 and liquid channels 376. The air stream 332 (shown in FIG. 2) travels through the air channels 336 between the membrane assemblies 378. The liquid in each liquid channel 376 exchanges heat and/or moisture with the air stream 332 in the air channels 336 through the membrane assemblies 378. The air channels 336 alternate with the liquid channels 376. Except for the two side panels of the energy exchange cavity, each air channel 336 may be positioned between adjacent liquid channels 376.

In order reduce the liquid channels 376 from outwardly bulging or bowing, the membrane assemblies 378 each may include a plurality of tensile support members, as described in the examples of FIGS. 1A-1D. Additionally, to further reduce the liquid channels 376 from outwardly bulging or bowing, support assemblies may be positioned within the air channels 336. Such support assemblies can be configured to support the membrane assemblies 378, as well as promote turbulent air flow in the air channels 336.

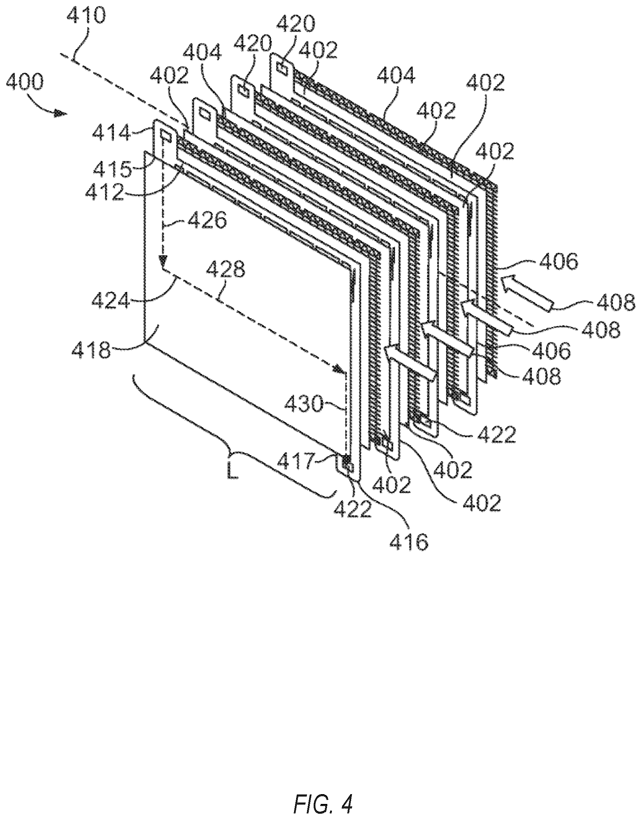

FIG. 4 is an exploded view of an energy exchange cavity 400 of a LAMEE, e.g., LAMEE 300. The energy exchange cavity 400 may include a plurality of liquid panel assemblies 402 spaced apart from one another by support assemblies 404. The support assemblies 404 may reside in air channels 406. Airflow 408 is configured to pass through the air channels 406 between liquid panel assemblies 402. As shown, the airflow 408 may generally be aligned with a horizontal axis 410 of the energy exchange cavity 400. Thus, the airflow 408 may be horizontal with respect to the energy exchange cavity 400. Notably, however, the support assemblies 404 may include turbulence promoters configured to generate turbulence, eddies, and the like in the airflow 408 within the energy exchange cavity 400.

Each liquid panel assembly 402 may include a support frame 412 connected to an inlet member 414 at an upper corner 415 and an outlet member 416 at a lower corner 417 that may be diagonal to the upper corner 415. Further, membrane assemblies 418 in accordance with this disclosure are positioned on each side of the support frame 412. The membrane assemblies 418 sealingly engage the support frame 412 along outer edges in order to contain liquid within the liquid panel assembly 402.

Each inlet member 414 may include a liquid delivery opening 420, while each outlet member 416 may include a liquid passage opening 422. The liquid delivery openings 420 may be connected together through conduits, pipes, or the like, while the liquid passage openings 422 may be connected together through conduits, pipes, or the like. Optionally, the inlet members 414 and outlet members 416 may be sized and shaped to directly mate with one another so that a liquid-tight seal is formed therebetween. Accordingly, liquid may flow through the liquid delivery openings 420 and the liquid passage openings 422. The inlet members 414 and outlet members 416 may be modular components configured to selectively couple and decouple from other inlet members 414 and outlet members 416, respectively. For example, the inlet members 414 and outlet members 416 may be configured to securely mate with other inlet members 414 and outlet members 416, respectively, through snap and/or latching connections, or through fasteners and/or adhesives.

As shown, the liquid panel assemblies 402, the support assemblies 404, and the air channels 406 may all be vertically oriented. The liquid panel assemblies 402 may be flat plate exchangers that are vertically-oriented with respect to a base that is supported by a floor, for example, of a structure.

In operation, liquid flows into the liquid delivery openings 420 of the inlet members 414. For example, the liquid may be pumped into the liquid delivery openings 420 through a pump. The liquid then flows into the support frames 412 through a liquid path 424 toward the outlet members 416. As shown, the liquid path 424 includes a vertical descent 426 that connects to a horizontal, flow portion, such as a flow portion 428, which, in turn, connects to a vertical descent 430 that connects to the liquid passage opening 422 of the outlet member 416. The vertical descents 426 and 430 may be perpendicular to the horizontal, flow portion 428. As such, the liquid flows through the solution panel assemblies 402 from the top corners 415 to the lower corners 417. The horizontal flow portion 428 provides liquid that may counterflow with respect to the airflow 408. Alternatively, the flow portion may be a crossflow, cross-counterflow, parallel-aligned flow, or other such flow configurations.

The airflow 408 that passes between the liquid panel assemblies 402 exchanges energy with the liquid flowing through the liquid panel assemblies 402. The liquid may be water, a desiccant, refrigerant, or any other type of liquid that may be used to exchange energy with the airflow 408.

The energy exchange cavity 400 may include more or less liquid panel assemblies 402, support assemblies 404, and air channels 406 than those shown in FIG. 4. The inlet and outlet members 414 and 416 may be modular panel headers that are configured to selectively attach and detach from neighboring inlet and outlet members 414 and 416 to provide a manifold for liquid to enter into and pass out of the liquid panel assemblies 402. Sealing agents, such as gaskets, silicone gel, or the like, may be disposed between neighboring inlet members 414 and neighboring outlet members 416. At least a portion of the membrane assemblies 418 can sealingly engage the inlet and outlet members 414 and 416.

In manufacturing or fabrication of the membrane assembly, a fibrous substrate can be provided or obtained for production. The fibrous substrate can be supplied as a bolt of material, such as a roll of material. The fibrous substrate can be attached to a plurality of tensile members. In one example, the fibrous substrate can be supplied in the bolt or roll of material having previously been attached to, impregnated with, or woven with the plurality of tensile members. The fibrous substrate can be supplied on rolls having the tensile members running substantially parallel to the direction in which the material is rolled. Alternatively or additionally, the fibrous substrate can be supplied on rolls having the tensile members running substantially perpendicular to the direction in which the material is rolled. Further, the fibrous substrate can have the tensile members running diagonal to the direction in which the material is rolled. The fibrous substrate can be cut to a predetermined height for suitable use in a liquid to air membrane energy exchanger (LAMEE). The fibrous substrate can be laminated, bonded, or attached to a membrane film.

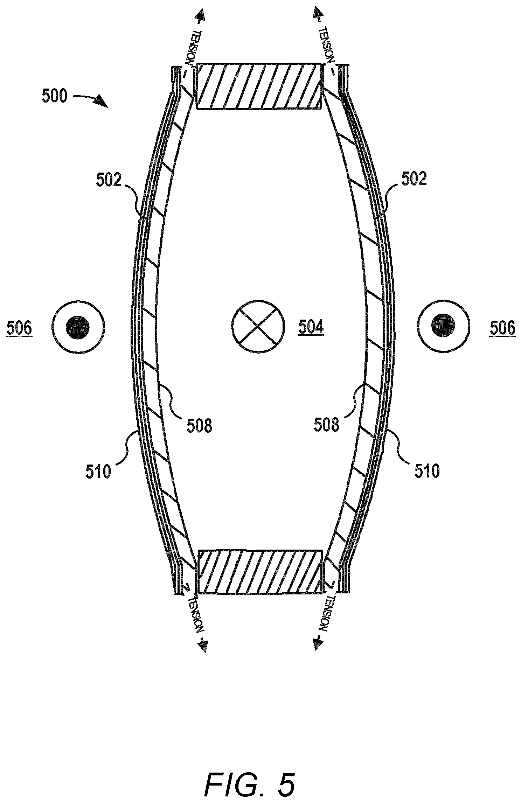

FIGS. 5 depicts a portion of an example LAMEE 500 including a membrane assembly 502. The LAMEE 500 includes membrane assembly 502 which are substantially similar to LAMEE 100 and membrane assembly 102, described above with reference to FIG. 1A-1D. The components, structures, configurations, functions, etc. of membrane assembly 502 can therefore be the same as or substantially similar to that described in detail with respect to membrane assembly 102. FIG. 5 is an elevation front view depicting the LAMEE 500, including the liquid channel 504, the air channel 506, and the membrane assembly 502 therebetween. FIG. 5 depicts the bulging of the membrane assembly 502. Additionally, FIG. 5 depicts the LAMEE 500 in one possible orientation in which it may be operated with the liquid channel 504 and the air channel 506 oriented for horizontal liquid and air flow and the membrane assembly spanning the channels and in the absence of struts, such as the struts 108 depicted in FIG. 1B. Alleviating a need for external struts can help reduce an airside pressure drop from an air channel 506 of a LAMEE 500 in operation or use as well as lower a manufacturing cost thereof. Further, a self-supporting membrane assembly 502, not needing external support from struts, stringers, or a frame, can allow for more flexible orientation of the LAMEE 500, e.g., allow for smaller or less-wide LAMEE 500 arrangements.

In examples, the membrane assembly 502 is a multi-layer laminate including a membrane film 508 and, in the orientation of FIG. 5, a plurality of vertically extending and horizontally spaced apart tensile support members 510 (e.g., substantially similar to tensile support members 110 of FIG. 1A). The tensile support members can be filaments formed from a variety of materials and can be oriented perpendicular to direction of flow of liquid through liquid channel 504 and air through air channel 506. The orientation of tensile support members relative to the direction of fluid flow through LAMEE 100 can be adapted to improve/optimize tensile strength of the membrane assembly 502 against a pressure force from the liquid flowing through liquid channel 504. For example, the tensile support members can be arranged such as to alleviate the need for struts for compressing the membrane assembly 502 against a liquid pressure force within the liquid channel 504. For example, the membrane assembly can be arranged, such as including tensile support members, to bulge and withstand a liquid pressure force within the liquid channel 504 without the need for external supporting struts, stringers, frames, or other structures.

The tensile support members 510 can be formed from a variety of materials, including, for example, ceramic, metallic, and/or glass fibers, or synthetic polymers such as thermoplastics, thermosets, elastomers, or synthetic fibers. The tensile support members 510 can be a filament formed of polypropylene, polyester, Teflon fluorinated ethylene propylene, polyamide, polypropylene, Polyethylene, Polybutylene, Polymethylpentene, Polycarbonate, Polytetrafluoroethylene, Polyether ether ketone, or other polymers. The tensile support members 510 can be single stranded, double stranded, or multi-stranded. In some examples, the tensile support member 510 can be formed of threads or other types of netting, mesh, woven, or extruded materials.

For example, the tensile support members can be elongated filaments that function to transfer the force generated by liquid pressure in liquid channel 504 to an internal support 509 arranged between two membrane assemblies 502, and without the need to transfer the force generated by liquid pressure in the liquid channel 504 to external struts, such as struts 108 depicted in FIG. 1B. For example, a panel of a LAMEE 500 including two membrane assemblies 502 arranged opposite each other against at least one internal support 509 can be self-supporting, able to withstand liquid pressure within the liquid channel 504 without needing external support.

The membrane film 508 can be a semi-permeable or vapor permeable film, by which generally anything in a gas phase can pass through the membrane and anything in a liquid or solid phase cannot pass through the membrane. The membrane film 508 can also include a micro-porous membrane that is similarly configured to allow gases but not liquids or solids to pass through the membrane. Additionally, the membrane film employed in membrane assemblies in accordance with this disclosure can be a non-porous film having selective permeability, e.g., for water vapor/molecules, but not for other constituents in vapor/gas form/state/phase. The membrane film 508 can be constructed of polytetrafluoroethylene (PTFE), polypropylene, polyethylene, or other suitable membrane materials.

In an example, the membrane assembly 502 can be attached to the internal support 509 by a physical adhesive or bond. For example, the membrane assembly 502 can be attached to the internal support 509 by an adhesive tape such as a 3M^{™} Acrylic Adhesive, a solvent based adhesive such as including one of polychloroprene, polyurethane, acrylic, silicone, or rubber and a solvent. Also, the membrane assembly 502 can be attached to the internal support 509 via a direct thermal bond such as a spot weld, a laser weld, or an ultrasonic (UT) weld. Other types of thermal bonds can also be created such as by melting at a target bond location one of the internal support 509 or the membrane assembly 502 to create a bond.

The loading of the membrane assembly 502 may be, in some applications including the example depicted in FIG 5, generally in a single direction and tensile support members may therefore be configured and arranged to increase the strength of the membrane assembly 502 in this single loading direction. Thus, in some examples, the membrane assembly 502 can have a pre-determined directional strength that is configured to oppose the liquid pressure force from a first direction while being relatively less capable of opposing other forces from other directions. In so doing, the membrane assembly 502 can provide useful rigidity/strength and can minimize displacement or bulging of the assembly 502 into the air channel 506, while eliminating the need for support material to provide rigidity in directions that do not experience forces from the liquid in the liquid channel 502 or other sources.

Thus, the membrane assembly 502, particularly the tensile support members 510, can provide a tailored, directional rigidity/strength against the pressure from the liquid in the liquid channel 504 while not substantially inhibiting permeability of the membrane assembly 502 or contact of the air and liquid with the surface of a membrane film of the membrane assembly 502.

In FIG. 5, two membrane assemblies 502 are arranged between the internal supports 509 to form the liquid channel 504 therebetween. The membrane assemblies 502 can each be attached to or held by the internal supports 509. A liquid flowing through the liquid channel 504 exerts an outward or bulging pressure on each of the membrane assemblies 502, as indicated by the arrows in FIG. 5. The membrane assemblies 502 include the tensile support members (such as tensile support members 110 depicted in FIG. 1A) to increase the rigidity/strength of the membrane assemblies 502 and to thereby decrease the displacement or bulging of either of the membrane assemblies 502 into adjacent air channels 506. In reducing such restriction of the air channels 506, the membrane assembly 502 can reduce pressure drop across the LAMEE 500 and, for example, associated fan power needed to compensate for such pressure drop. Also, in alleviating the need for external struts to apply inward pressure or compression against the bulging, the membrane assembly 502 can reduce certain design restrictions, such as restrictions pertaining to LAMEE 500 component layout of certain membrane assemblies 502 relying on external struts to counteract the force generated by liquid pressure in the liquid channel 504.

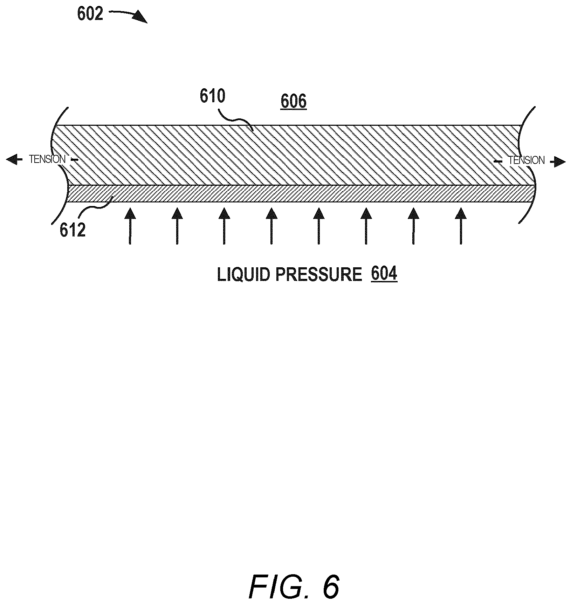

FIG. 6 is a cross-sectional view depicting an example of the multi-layer construction of example membrane assembly 602. The membrane assembly 602 is substantially similar to membrane assembly 102, described above with reference to FIG. 1A-1D without a substrate layer between a membrane film 612 and tensile support members 610, thus forming a two-layer membrane assembly 602. The membrane film 612 can be arranged in the layer super adjacent to a liquid channel 604 and the liquid flowing therethrough with the tensile support members 610 in the next layer over the membrane film 612. For example, directly bonding the membrane film 612 and the tensile support members 610 (such as a tensile support member layer) can help allow for construction of a LAMEE without the need for external struts to support the membrane assembly and to counteract a liquid pressure force from the liquid channel, such as described above with respect to FIG. 5.

The membrane film 612 can be a semi-permeable or vapor permeable film, by which generally anything in a gas phase can pass through the membrane and anything in a liquid or solid phase cannot pass through the membrane. The membrane film 612 can also include a micro-porous membrane that is similarly configured to allow gases but not liquids or solids to pass through the membrane. Additionally, the membrane film employed in membrane assemblies in accordance with this disclosure can be a non-porous film having selective permeability, e.g., for water vapor/molecules, but not for other constituents in vapor/gas form/state/phase. The membrane film 612 can be constructed of polytetrafluoroethylene (PTFE), polypropylene, polyethylene, or other suitable membrane materials.

The tensile support members 610 can be oriented such as to carry the load of liquid pressure in an exchanger and to transfer this load to an external supporting structure, such as the struts 108, as described in detail above with respect to FIG. 1A-1D. The tensile support members 610 can be formed from a variety of materials, including, for example, ceramic, metallic, and/or glass fibers, or synthetic polymers such as thermoplastics, thermosets, elastomers, or synthetic fibers. The tensile support members 610 can be a filament formed of polypropylene, polyester, Teflon fluorinated ethylene propylene, polyamide, polypropylene, Polyethylene, Polybutylene, Polymethylpentene, Polycarbonate, Polytetrafluoroethylene, Polyether ether ketone, or other polymers. The tensile support members 610 can be single stranded, double stranded, or multi-stranded. In some examples, the tensile support member 610 can be formed of threads or other types of netting, mesh, woven, or extruded materials.

The above description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel", "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. The scope of the invention should be determined with reference to the appended claims.

## Claims

1. A membrane assembly (102, 378, 602) for use in a liquid to air membrane energy exchanger, LAMEE (100, 300), the membrane assembly comprising:
a membrane film (112) configured to transfer heat and moisture between a liquid and air flowing through the LAMEE (100);
a pair of struts (108) arranged toward opposing ends of the membrane film (112), each strut of the pair of struts spanning a length of the membrane film in a direction of flow of the liquid through the LAMEE (100); and
a plurality of tensile support members (110) connected to the membrane film (112), the plurality of tensile support members being in spaced relation to one another, spanning a height of the membrane film perpendicular to the pair of struts (108), and configured and arranged to increase a strength of the membrane assembly in a single loading direction.

2. The membrane assembly (102, 378, 602) of claim 1, wherein the plurality of tensile support members (110) are substantially parallel to one another.

3. The membrane assembly (102, 378, 602) of claim 1, wherein each of the plurality of tensile support members (110) spans entirely across a major dimension of the membrane film (112).

4. The membrane assembly (102, 378, 602) of claim 1, wherein each of the plurality of tensile support members (110) comprises an elongated filament.

5. The membrane assembly (102, 378, 602) of claim 1, wherein the plurality of tensile support members (110) are configured to provide tensile strength against a force applied on the membrane assembly into an air flow channel (106) of the LAMEE (100, 300).

6. The membrane assembly (102, 378, 602) of claim 1, wherein the plurality of tensile support members (110) are each curved to project into a liquid channel (104) of the LAMEE (100, 300).

7. The membrane assembly (102, 378, 602) of claim 1, wherein each of the plurality of tensile support members (110) comprise non-woven spun-bonded filament(s).

8. The membrane assembly (102, 378, 602) of claim 1, wherein each of the plurality of tensile support members (110) comprise spun-bonded nanofibers.

9. The membrane assembly (102, 378, 602) of claim 1, wherein the membrane film (112) comprises a microporous film.

10. The membrane assembly (102, 378, 602) of claim 1, wherein the membrane film (112) comprises a low surface energy polymer.

11. The membrane assembly (102, 378, 602) of claim 1, wherein the membrane film (112) comprises polytetrafluoroethylene.

12. A liquid panel (402) for use in a liquid to air membrane energy exchanger, LAMEE, the liquid panel comprising:
a support frame (412); and
a pair of membrane assemblies (102, 378, 602) connected to opposing sides of the support frame, wherein each membrane assembly is in accordance with claim 1.

13. A liquid to air membrane energy exchanger, LAMEE (100), comprising:
a plurality of liquid panels (402) in accordance with claim 12, each of which forms a plurality of liquid flow channels (104); and
a plurality of air channels (106),
wherein the plurality of liquid panels and plurality of air channels are stacked in alternating relation with a pair of liquid panels on opposing sides of each air channel.

## Patentansprüche

1. Membrananordnung (102, 378, 602) zur Verwendung in einem Flüssigkeit-Luft-Membran-Energietauscher, LAMEE (100, 300), wobei die Membrananordnung Folgendes umfasst:
einen Membranfilm (112), der so konfiguriert ist, dass er Wärme und Feuchtigkeit zwischen einer Flüssigkeit und Luft, die durch den LAMEE (100) strömt, überträgt;
ein Paar Streben (108), die an gegenüberliegenden Enden des Membranfilms (112) angeordnet sind, wobei jede Strebe des Paars von Streben eine Länge des Membranfilms in einer Strömungsrichtung der Flüssigkeit durch den LAMEE (100) überspannt; und
mehrere Zugstützelemente (110), die mit dem Membranfilm (112) verbunden sind, wobei die mehreren Zugstützelemente zueinander beabstandet sind, sich über eine Höhe des Membranfilms senkrecht zu dem Paar Streben (108) erstrecken und so konfiguriert und angeordnet sind, dass sie eine Festigkeit der Membrananordnung in einer einzigen Belastungsrichtung erhöhen.

2. Membrananordnung (102, 378, 602) nach Anspruch 1, wobei mehrere Zugstützelemente (110) im Wesentlichen parallel zueinander angeordnet sind.

3. Membrananordnung (102, 378, 602) nach Anspruch 1, wobei sich jedes der mehreren Zugstützelemente (110) vollständig über eine Hauptabmessung des Membranfilms (112) spannt.

4. Membrananordnung (102, 378, 602) nach Anspruch 1, wobei jedes der mehreren Zugstützelemente (110) ein längliches Filament umfasst.

5. Membrananordnung (102, 378, 602) nach Anspruch 1, wobei die mehreren Zugstützelemente (110) so konfiguriert sind, dass sie Zugfestigkeit gegen eine auf die Membrananordnung in einen Luftstromkanal (106) des LAMEE (100, 300) ausgeübte Kraft bereitstellen.

6. Membrananordnung (102, 378, 602) nach Anspruch 1, wobei die mehreren Zugstützelemente (110) jeweils so gekrümmt sind, dass sie in einen Flüssigkeitskanal (104) des LAMEE (100, 300) hineinragen.

7. Membrananordnung (102, 378, 602) nach Anspruch 1, wobei jedes der mehreren Zugstützelemente (110) nicht gewebte(s), spinnvliesgebundene(s) Filament(e) umfasst.

8. Membrananordnung (102, 378, 602) nach Anspruch 1, wobei jedes der mehreren Zugstützelemente (110) spinngebundene Nanofasern umfasst.

9. Membrananordnung (102, 378, 602) nach Anspruch 1, wobei der Membranfilm (112) einen mikroporösen Film umfasst.

10. Membrananordnung (102, 378, 602) nach Anspruch 1, wobei der Membranfilm (112) ein Polymer mit niedriger Oberflächenenergie umfasst.

11. Membrananordnung (102, 378, 602) nach Anspruch 1, wobei der Membranfilm (112) Polytetrafluorethylen umfasst.

12. Flüssigkeitspaneel (402) zur Verwendung in einem Flüssigkeit-Luft-Membran-Energieaustauscher, LAMEE, wobei das Flüssigkeitspaneel Folgendes umfasst:
einen Stützrahmen (412); und
ein Paar Membrananordnungen (102, 378, 602), die an gegenüberliegenden Seiten des Stützrahmens verbunden sind, wobei jede Membrananordnung Anspruch 1 entspricht.

13. Flüssigkeit-Luft-Membran-Energietauscher, LAMEE (100), umfassend:
mehrere Flüssigkeitspaneele (402) nach Anspruch 12, von denen jedes mehrere Flüssigkeitsströmungskanäle (104) bildet; und
mehrere Luftkanäle (106),
wobei die mehreren Flüssigkeitspaneele und mehreren Luftkanäle abwechselnd übereinander angeordnet sind, wobei sich auf gegenüberliegenden Seiten jedes Luftkanals jeweils ein Paar Flüssigkeitspaneele befindet.

## Revendications

1. Ensemble membrane (102, 378, 602) destiné à être utilisé dans un échangeur d'énergie à membrane liquide-air, LAMEE (100, 300), l'ensemble membrane comprenant :
un film de membrane (112) configuré pour transférer de la chaleur et de l'humidité entre un liquide et de l'air s'écoulant à travers le LAMEE (100) ;
une paire d'entretoises (108) agencées vers les extrémités opposées du film de membrane (112), chaque entretoise de la paire d'entretoises couvrant une longueur du film de membrane dans une direction d'écoulement du liquide à travers le LAMEE (100) ; et
une pluralité d'éléments de support de traction (110) reliés au film de membrane (112), la pluralité d'éléments de support de traction étant espacés les uns des autres, couvrant une hauteur du film de membrane perpendiculaire à la paire d'entretoises (108) et configurés et agencés pour augmenter une résistance de l'ensemble membrane dans une seule direction de chargement.

2. Ensemble membrane (102, 378, 602) selon la revendication 1, dans lequel la pluralité d'éléments de support de traction (110) sont sensiblement parallèles les uns aux autres.

3. Ensemble membrane (102, 378, 602) selon la revendication 1, dans lequel chacun de la pluralité d'éléments de support de traction (110) s'étend entièrement sur une dimension majeure du film de membrane (112).

4. Ensemble membrane (102, 378, 602) selon la revendication 1, dans lequel chacun de la pluralité d'éléments de support de traction (110) comprend un filament allongé.

5. Ensemble membrane (102, 378, 602) selon la revendication 1, dans lequel la pluralité d'éléments de support de traction (110) sont configurés pour fournir une résistance à la traction contre une force appliquée sur l'ensemble membrane dans un canal d'écoulement d'air (106) du LAMEE (100, 300).

6. Ensemble membrane (102, 378, 602) selon la revendication 1, dans lequel la pluralité d'éléments de support de traction (110) sont chacun courbés pour se projeter dans un canal liquide (104) du LAMEE (100, 300).

7. Ensemble membrane (102, 378, 602) selon la revendication 1, dans lequel chacun de la pluralité d'éléments de support de traction (110) comprend un ou plusieurs filaments non tissés filés-liés.

8. Ensemble membrane (102, 378, 602) selon la revendication 1, dans lequel chacun de la pluralité d'éléments de support de traction (110) comprend des nanofibres filées-liées.

9. Ensemble membrane (102, 378, 602) selon la revendication 1, dans lequel le film de membrane (112) comprend un film microporeux.

10. Ensemble membrane (102, 378, 602) selon la revendication 1, dans lequel le film de membrane (112) comprend un polymère à faible énergie de surface.

11. Ensemble membrane (102, 378, 602) selon la revendication 1, dans lequel le film de membrane (112) comprend du polytétrafluoroéthylène.

12. Panneau liquide (402) destiné à être utilisé dans un échangeur d'énergie à membrane liquide-air, LAMEE, le panneau liquide comprenant :
un cadre de support (412) ; et
une paire d'ensembles membranes (102, 378, 602) reliés aux côtés opposés du cadre de support, dans lequel chaque ensemble membrane est conforme à la revendication 1.

13. Échangeur d'énergie à membrane liquide-air, LAMEE (100) comprenant :
une pluralité de panneaux liquides (402) conformément à la revendication 12, chacun formant une pluralité de canaux d'écoulement de liquide (104) ; et
une pluralité de canaux d'air (106),
dans lequel la pluralité de panneaux liquides et la pluralité de canaux d'air sont empilées en relation alternée avec une paire de panneaux liquides sur les côtés opposés de chaque canal d'air.
